# EUROPEAN PATENT APPLICATION

(11) **EP 4 460 055 A1**
(43) Date of publication of application: **06.11.2024**
(21) Application number: 22915128.7
(22) Date of filing: 29.12.2022
(51) Int. Cl.: H04W 12/02, G06N 5/04, G06N 20/20

(54) **DATA PROCESSING METHOD AND APPARATUS, AND COMMUNICATION DEVICE**

(30) Priority: 30.12.2021 CN 202111669990
(71) Applicant: VIVO MOBILE COMMUNICATION CO., LTD., Dongguan, Guangdong 523863 (CN)
(72) Inventor: CHONG, Weiwei, Dongguan, Guangdong 523863 (CN)
(74) Representative: Lavoix
(86) International application number: PCT/CN2022/143669
(87) International publication number: WO 2023/125879

(57) **Abstract**

This application discloses a data processing method and apparatus, and a communication device, belonging to the technical field of communication. The data processing method in embodiments of this application includes the following steps. In a case that a first network element performs a federated inference process corresponding to a first inference task, the first network element sends a federated inference request message to at least one second network element, where the federated inference request message at least includes information related to the first inference task, and the second network element is a network element participating in the federated inference process. The first network element receives first information sent by the at least one second network element, where the first information at least includes a first inference result. The first network element determines, based on at least one of the first inference result, a second inference result corresponding to the first inference task.

## Description

### CROSS-REFERENCE TO RELATED APPLICATIONS

This application claims priority to Chinese Patent Application No.202111669990.4 filed on December 30, 2021, which is incorporated herein by reference in its entirety.

### TECHNICAL FIELD

This application relates to the technical field of communication, in particular, to a data processing method and apparatus, and a communication device.

### BACKGROUND

In the field of communication, for a communication service, data processing (such as data analysis) may be performed based on data produced from different domains (such as a core domain, an access domain, a management domain, and a third service domain) or different network elements to improve efficiency and reliability of a communication service.

However, with more attention to data security and privacy issues, there may be data isolation between different domains and different network elements/devices in a communication network. Therefore, how to realize data inference based on data in different domains or different network elements has become an urgent technical problem to be solved.

### SUMMARY

Embodiments of this application provide a data processing method and apparatus, and a communication device, which can realize data inference by uniting data located on different domains and different network elements without data sharing.

According to a first aspect, a data processing method is provided, and the method includes: In a case that a first network element performs a federated inference process corresponding to a first inference task, the first network element sends a federated inference request message to at least one second network element, where the federated inference request message at least includes information related to the first inference task, and the second network element is a network element participating in the federated inference process. The first network element receives first information sent by the at least one second network element, where the first information at least includes a first inference result. The first network element determines, based on at least one of the first inference result, a second inference result corresponding to the first inference task.

According to a second aspect, a data processing method is provided, and the method includes: A second network element receives a federated inference request message sent by a first network element, where the federated inference request message at least includes information related to a first inference task. The second network element performs inference based on the federated inference request message, to obtain a first inference result. The second network element sends first information to the first network element, where the first information at least includes the first inference result.

According to a third aspect, a data processing apparatus is provided, and the apparatus includes: a first sending module, configured to: in a case that a federated inference process corresponding to a first inference task is performed, send a federated inference request message to at least one second network element, where the federated inference request message at least includes information related to the first inference task, and the second network element is a network element participating in the federated inference process; a first receiving module, configured to receive first information sent by the at least one second network element, where the first information at least includes a first inference result; and a first inference module, configured to determine, based on at least one of the first inference result, a second inference result corresponding to the first inference task.

According to a fourth aspect, a data processing apparatus is provided, and the apparatus includes: a second receiving module, configured to receive a federated inference request message sent by a first network element, where the federated inference request message at least includes information related to a first inference task; a second inference module, configured to perform inference based on the federated inference request message, to obtain a first inference result; and a second sending module, configured to send first information to the first network element, where the first information at least includes the first inference result.

According to a fifth aspect, a communication device is provided, where the communication device includes a processor and a memory, the memory stores a program or instructions that can be run on the processor, and when the program or the instructions is/are executed by the processor, steps of the method according to the first aspect or second aspect are implemented.

According to a sixth aspect, a communication device is provided, including a processor and a communication interface, where the communication interface is coupled to the processor, and the processor is configured to run a program or instructions, to implement the steps of the method according to the first aspect, or implement the steps of the method according to the second aspect.

According to a seventh aspect, a federated data processing system is provided, and the system includes: a first network element and a second network element, where the first network element may be configured to perform the steps of the data processing method according to the first aspect, and the second network element may be configured to perform the steps of the data processing method according to the second aspect.

According to an eighth aspect, a readable storage medium is provided, where the readable storage medium stores a program or instructions, and when the program or the instructions is/are executed by a processor, the processor performs the steps of the method according to the first aspect, or performs the steps of the method according to the second aspect.

According to a ninth aspect, a chip is provided, where the chip includes a processor and a communication interface, the communication interface is coupled to the processor, and the processor is configured to run a program or instructions, to implement the steps of the method according to the first aspect, or implement the steps of the method according to the second aspect.

According to a tenth aspect, a computer program product/program product is provided, where the computer program product/program product is stored in a storage medium, and the computer program product/program product is executed by at least one processor, to implement the steps of the method according to the first aspect, or implement the steps of the method according to the second aspect.

In embodiments of this, the first network element unites each second network element to implement local distributed data inference by using a federated inference manner, thereby ensuring data privacy and data security in each second network element and reliability of the inference result without sharing inference data on each second network element in the communication network.

### BRIEF DESCRIPTION OF THE DRAWINGS

FIG. 1 is a schematic diagram of a structure of a wireless communication system according to an example embodiment of this application;
FIG. 2 is a schematic diagram of a structure of a federated data processing system according to an example embodiment of this application;
FIG. 3 is a first schematic flowchart of a data processing method according to an embodiment of this application;
FIG. 4 is a second schematic flowchart of a data processing method according to an embodiment of this application;
FIG. 5 is a schematic flowchart of interaction of a data processing method according to an embodiment of this application;
FIG. 6 is a third schematic flowchart of a data processing method according to an embodiment of this application;
FIG. 7 is a first schematic diagram of a structure of a data processing apparatus according to an embodiment of this application;
FIG. 8 is a second schematic diagram of a structure of a data processing apparatus according to an embodiment of this application;
FIG. 9 is a schematic diagram of a structure of a communication device according to an example embodiment of this application;
FIG. 10 is a schematic diagram of a structure of a terminal according to an example embodiment of this application;
FIG. 11 is a first schematic diagram of a structure of a network-side device according to an embodiment of this application; and
FIG. 12 is a second schematic diagram of a structure of a network-side device according to an embodiment of this application.

### DETAILED DESCRIPTION

The technical solutions in embodiments of this application are clearly described in the following with reference to the accompanying drawings in embodiments of this application. Apparently, the described embodiments are merely some rather than all of embodiments of this application. All other embodiments obtained by a person skilled in the art based on embodiments of this application fall within the protection scope of this application.

In the specification and claims of this application, terms "first" and "second" are used to distinguish similar objects, but are unnecessarily used to describe a specific sequence or order. It is to be understood that terms used in this way are exchangeable in a proper case, so that embodiments of this application herein can be implemented in an order different from the order shown or described herein described. In addition, objects distinguished by "first" and "second" are generally of a same type, and a quantity of the objects is not limited. For example, a first object may be one object, or may be a plurality of objects. In addition, "and/or" in the specification and the claims represents at least one of the connected objects. The character "/" generally represents that associated objects are of an "or" relationship.

It should be noted that the technologies described in embodiments of this application are not limited to a lone term evolution (Long Term Evolution, LTE)/LTE-advanced (LTE-Advanced) system, and may further be used in another wireless communication system, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), and another system. The terms "system" and "network" in embodiments of this application can usually be exchangeable used. The described technology can be used in the systems and radio technologies mentioned above, and can further be used in other systems and radio technologies. The following description describes a new radio (NR) system for example purposes and uses NR terms in most of the following descriptions, but these technologies may further be applied to an application other than an NR system application, for example, a 6th generation (6th Generation, 6G) communication system.

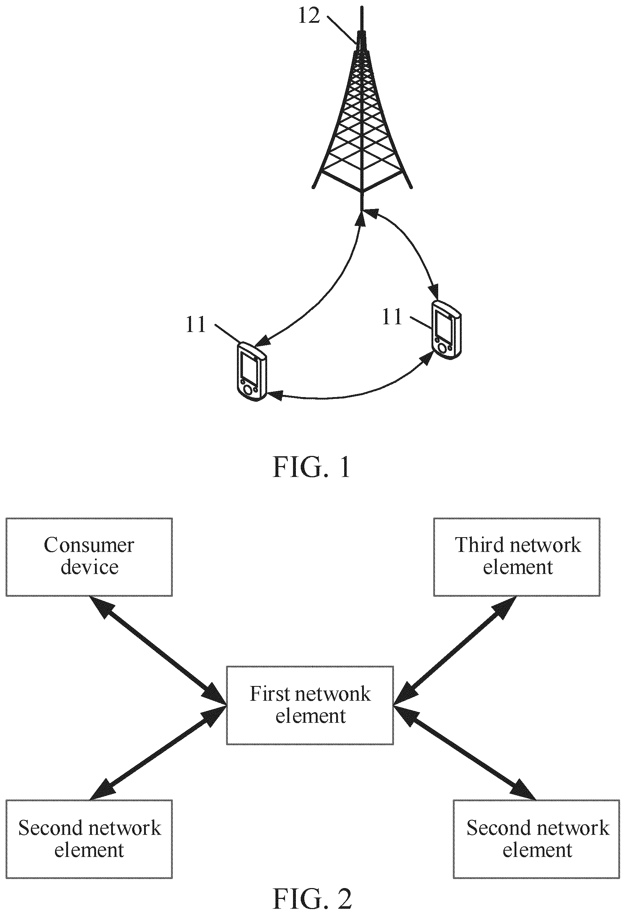

FIG. 1 is a block diagram of a wireless communication system to which embodiments of this application are applicable. The wireless communication system includes a terminal 11 and a network-side device 12. The terminal 11 may be a terminal side device, for example, a mobile phone, a tablet personal computer (Tablet Personal Computer), a laptop computer (Laptop Computer) or notebook computer, a personal digital assistant (Personal Digital Assistant, PDA), a pocket computer, an Internet notebook computer, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), an in-vehicle device (VUE), a pedestrian terminal (PUE), intelligent household (a household device having a wireless communication function, for example, a refrigerator, a television, a washing machine, and furniture), a game console, a personal computer (personal computer, PC), a teller machine, and a self-service machine. The wearable device includes a smart watch, a smart bracelet, a smart headphone, smart glasses, smart j ewelry (a smart brace ring, a smart brace chain, a smart ring, a smart necklace, a smart anklet, and the like), a smart wristband, smart clothing, and the like. It should be noted that, a specific type of the terminal 11 is not limited this embodiment of this application. The network-side device 12 may include an access network device or a core network device, where the access network device 12 may also be referred to as a radio access network device, a radio access network (Radio Access Network, RAN), a radio access network function, or a radio access network unit. The access network device 12 may include a base station, a WLAN access point, a Wi-Fi node, and the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a Home evolved NodeB, a transmitting receiving point (Transmitting Receiving Point, TRP), or some other suitable terms in the field. This is not limited to a particular technical vocabulary so long as same technical effect is achieved. It should be noted that only a base station in an NR system is used as an example in embodiments of this application, but a specific type of the base station is not limited.

On the basis of the wireless communication system, as shown in FIG. 2, this embodiment of this application further provides a schematic diagram of a structure of a federated data processing system, and the federated data processing system includes a first network element, a second network element, a third network element, and a consumer device.

As a federated inference network element in the federated data processing system, the first network element has a function of obtaining a local inference result reported by another local inference entity and aggregating the result to generate a global inference result. Based on this, the first network element can be a network element or device capable of providing a machine learning inference function in a communication network, for example, a network element or device dedicated to providing a network intelligent service, like a network data analytics function (Network Data Analytics Function, NWDAF), a management data analytics service (management data analytics service, MDAS), and a management data analytic function (management data analytic function, MDAF). Alternatively, the first network element may be a network element or device that provides another communication-related service (for example, a mobility management (Mobility Management, MM) service and a session management (Session Management, SM) service) and further has an intelligent function, for example, an access and mobility management function (Access and Mobility Management Function, AMF), a session management function (Session Management Function, SMF), and an application function (application function, AF). The AF may be an AF deployed by a communication operator, a third-party AF, or the like.

As a local inference entity in the federated data processing system, the second network element can be a network element or device that has a local machine learning inference capability in the communication network, for example, an artificial intelligence (Artificial Intelligence, AI) function network element in a radio access network (Radio Access Network, RAN) domain, an AI function network element in a core network (Core Network, CN) domain, a third-party AI application, an AI agent (client) in a UE, and a local communication service device. It should be noted that for ease of understanding, only two second network elements are illustrated in FIG. 2, but in practice, the second network element may be one or more.

The third network element may be used as a model provider (also referred to as a coordinator) in the federated data processing system, to train and provide an AI model used for data inference to the first network element. Based on this, the third network element may be a network element or device capable of providing a machine learning function in the communication network, for example, a network element or device dedicated to providing a network intelligent service, like an NWDAF, an MDAS, and an MDAF. Alternatively, the third network element may alternatively be a network element or device that provides another communication-related service (for example, an MM service and an SM service) and further has an intelligent function, for example, an AMF and an SMF. It can be understood that a model training manner adopted by the third network element may be but is not limited to a federated model training manner (namely, a federated learning and training manner) and the like.

Certainly, it should be noted that, in this application, in addition to providing the AI model used for data inference to the first network element by the third network element, the first network element may alternatively obtain the AI model used for data inference through a model training manner (for example, a federated model training manner or a federated learning and training manner). This is not limited herein in this embodiment.

As a consumer of an inference task in the wireless communication system, the consumer device may be a network element or device that requires data processing in the wireless communication system, for example, a third-party AI application, a UE, a Policy control function entity (Policy Control Function, PCF), an AMF, and an AF. In this application, the consumer device may send, for a specific data analysis task (for example, identification by using an analytics ID), an inference task request message to the first network element, to trigger a federated inference process.

It may be understood that the federated data processing system may include more or fewer network elements or devices than those described in FIG. 2. For example, as shown in FIG. 2, the federated data processing system may include the third network element (an inference target model required by the inference task is from the third network element), or may not include the third network element (the inference target model required by the inference task is from the first network element, where the first network element can generate the target model through a federated learning and training process), or the like. For another example, the federated data processing system may alternatively include a fourth network element not shown in FIG. 2, where the fourth network element may provide, through local training, the second network element with a local inference model required by the inference task, and the like. This is not limited herein.

The following describes in detail the technical solution provided in embodiments of this application by using some embodiments and application scenarios of the embodiments with reference to the accompany drawings.

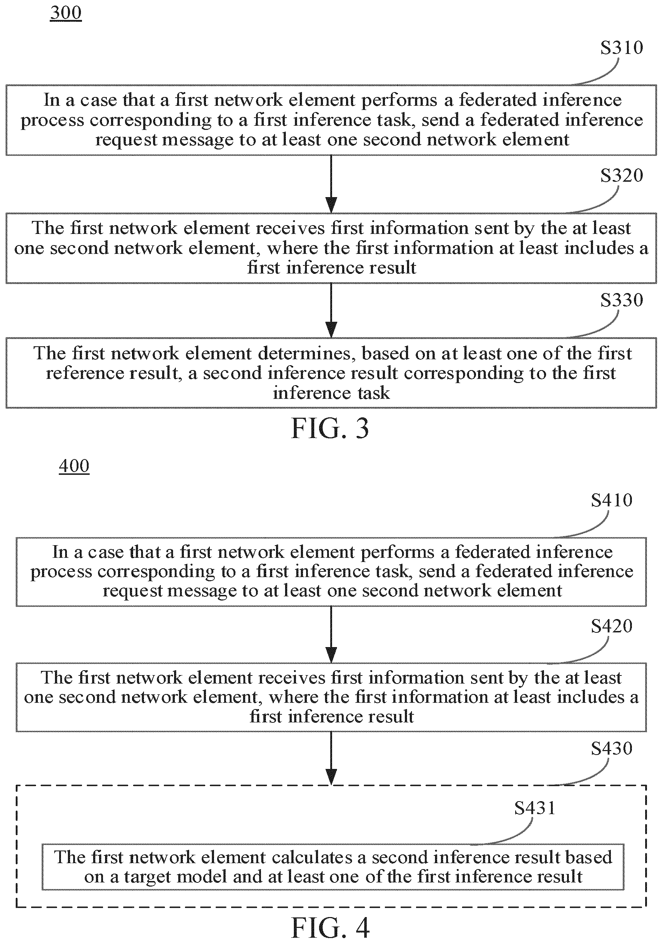

FIG. 3 is a schematic flowchart of a data processing method 300 according to an example embodiment of this application. The method 300 may be but is not limited to be executed by a first network element (for example, a terminal or a network-side device), and in particular, may be executed by hardware and/or software installed in the first network element. In this embodiment, the method 300 may at least include the following steps.

S310: In a case that a first network element performs a federated inference process corresponding to a first inference task, the first network element sends a federated inference request message to at least one second network element.

The second network element is an inference entity participating in the federated inference process. In this embodiment, the second network element may be determined by the first network element based on the first inference task, or the second network element may be determined by the first network element based on information related to the target model corresponding to the federated inference process, or the second network element may be a network element obtained by the first network element from a network repository function (Network Repository Function, NRF) or a unified data management entity (Unified Data Management, UDM) based on the model training task and can support the federated inference process.

For example, assuming that the second network element is determined by the first network element based on the information related to the target model corresponding to the federated inference process, a determining process of the second network element may include the following step. The first network element determines the second network element based on information (namely, fourth network element information) that is included in the information related to the target model and that is of a network element participating in training of the target model. For example, the first network element determines training network elements participating in training of the target model (for example, an AMF instance (instance(s)), an RAN instance(s), and an AF instance(s)), and then determines these training network elements as second network elements.

The federated inference request message includes at least information related to the first inference task that indicates that each second network element needs to j ointly perform the first inference task. Optionally, the first inference task may be a data analysis task, a data statistics task, and the like based on different business requirements.

In addition, the federated inference process may be triggered by the first network element based on an inference task of the first network element, and may alternatively be triggered by an inference task of the consumer device. Refer to FIG. 2. For example, when the federated inference process is triggered by the consumer device, an implementation process may include the following step. When the consumer device determines that an inference task like data analysis needs to be performed, the consumer device may send the inference task request message to the first network element, and the inference task request message includes the information related to the first inference task (for example, the data analysis task). Then, the first network element may trigger the federated inference process after receiving the inference task request message sent by the consumer device.

S320: The first network element receives first information sent by the at least one second network element.

The first information includes at least a first inference result. It may be understood that for each of the second network element, the first inference result is determined by the second network element based on local inference data and a local inference model. The local inference model may be from another network element other than the second network element, for example, the first network element indicates the local inference model to the second network element, and for another example, the fourth network element provides the local inference model to the second network element. The fourth network element is a network element that participates in a training process of the target model and is responsible for training of the local model. Alternatively, the local inference model may be obtained through local model training by the second network element. This is not limited herein.

S330: The first network element determines a second inference result corresponding to the first inference task based on at least one of the first inference result.

The first network element may determine the second inference result based on the first inference result from different second network element in a plurality of manners, for example, the first network element may process a received first inference result based on an AI model corresponding to the first inference task. This is not limited in this embodiment.

In addition, corresponding to triggering of the federated inference process, when the federated inference process is triggered by the consumer device, the first network element may send the second inference result to the consumer device after obtaining the second inference result.

In this embodiment, the first network element unites each second network element to implement local distributed data inference by using a federated inference manner, thereby ensuring data privacy and data security in each second network element and reliability of the inference result without sharing inference data on each second network element in the communication network.

FIG. 4 is a schematic flowchart of a data processing method 400 according to an example embodiment of this application. The method 400 may be executed but is not limited to be executed by a first network element (for example, a terminal or a network-side device), and in particular, may be executed by hardware and/or software installed in the first network element. In this embodiment, the method 400 may at least include the following steps.

S410: When performing a federated inference process corresponding to a first inference task, the first network element sends a federated inference request message to at least one second network element.

The federated inference request message at least includes information related to the first inference task, and the second network element is a network element participating in the federated inference process.

It may be understood that in addition to referring to related description in the method embodiment 300, in an implementation process of S410, the federated inference request message may include at least one of the following (11) to (15).

(11) Model instance identification information (model instance ID). The model instance identification information is used for identifying a target model required by the federated inference process, and uniquely designating a local inference model for inference to the second network element, for example, the second network element may associate a local inference model corresponding to a target model based on the model instance identification information.

In an implementation, the local inference model may belong to a sub-model or a part of the target model. Certainly, it should be noted that the local inference model mentioned in this application may be obtained by the second network element through local training, and may alternatively be obtained from another network element (for example, a fourth network element, where the fourth network element is a network element that participates in a training process of the target model and is responsible for local model training).

In addition, the target model may be obtained by the first network element through model training, for example, obtained by performing local distributed model training through a vertical federated model training process, or the target model may be obtained by the first network element from a third network element before/after determining that the federated inference process is required.

Based on this, an obtaining process of the target model is described below by using an example in which the target model is obtained by the first network element from the third network element. The obtaining process of the target model may include the following (111) to (113). The content is as follows.

(111) The first network element sends a model request message to the third network element. The model request message may at least carry information related to a first model training task (which may be understood as model training task information determined based on information of the first inference task), and the information is used for requesting the third network element to train and/or feedback the target model corresponding to the first inference task.

In an implementation, the model request message may include at least one of the following (11101) to (11104).

(11101) Type information of a model training task. The model training task corresponds to the first inference task, to indicate the third network element to train the target model corresponding to the first inference task, for example, a data analysis AI model for a data analysis task.

In this embodiment, the type information of the model training task may include an analytics identifier (analytics ID), a model identifier (model ID), and the like, used for indicating a machine learning task (namely, the model training task) for which the third network element performs model training.

For example, a string "analytics ID/model ID=UE mobility" may be used to indicate that model training needs to be performed for a movement trajectory of a UE to obtain an AI model of the movement trajectory of the UE. It should be noted that the type information may be represented by a numeric representation manner or another encoded representation manner in addition to the above-mentioned representation manner of the character string type. This is not limited herein.

(11102) Identification information of the model training task.

Similar to the type information of the model training task, the identification information of the model training task may also include the analytics ID, the model ID, and the like, used for indicating a machine learning task (namely, the model training task) for which the third network element performs model training.

It may be understood that in order to avoid information redundancy, the model request message may include any one of the identification information of the model training task and the type information of the model training task.

(11103) Information related to a second filter. The information may alternatively be understood as filter information of model training, used for defining at least one of a target object (for example, a target UE (target UE(s)), a target time (for example, a target time period (target time period)), and a target area (for example, a target area of interest (target area of interest, target AOI)) corresponding to the model training task, so that the third network element can perform model training based on the information related to the second filter.

(11104) Information related to model feedback. The information related to model feedback may include at least one of a model feedback format and a feedback condition.

The model feedback format may be understood as model framework information, for example, an expression manner based on a TensorFlow and Pytorch model framework, or may alternatively be understood as a model expression manner (for example, ONNX) based on cross-framework, or the like.

The feedback condition may include event triggering and/or period triggering, where the event triggering includes at least one of (a) to (c).

(a) When a quantity of training rounds (or a quantity of training times) of training the target model by the third network element reaches a predetermined value, the third network element feeds back the target model.

(b) Before a training time reaches a maximum waiting time, the third network element feeds back the target model.

(c) When the target model converges (a loss function corresponding to the target model reaches a preset value and a corresponding preset value), the third network element feeds back the target model.

The period triggering means that the third network element may periodically feed back the target model to the first network element, for example, feed back the target model every 5 minutes.

(112) The third network element performs query or training of the target model based on the model request message.

The third network element may select the target model from trained models when the third network element performs query of the target model.

Alternatively, the third network element may train the target model based on a vertical federated model training process when training the target model, that is, the third network element may send a federated model training request message to a training entity, to request each training entity to perform local model training and feed back model training intermediate data, and then the third network element performs model training based on the received model training intermediate data fed back by each training entity, to obtain the target model. Therefore, local distributed model training can be jointly performed with each training entity to obtain the target model without data sharing. This can protect security and privacy of data on each training entity, and can ensure reliability of the target model.

Certainly, after obtaining through query or training the target model, the third network element may send information related to the target model to the first network element, to indicate the target model to the first network element.

Based on this, the information related to the target model may at least include information of the target model. In this embodiment, the information of the target model includes at least one of the following (1121) to (1126).

(1121) Model structure information. The model structure information indicates a specific model structure of the target model (for example, a neural network, a deep neural network (DNN), a convolution neural network (CNN), a cyclic neural network (RNN), and a linear structure).

In addition, according to the neural network model structure, the model structure information may further specify a layer of a neural network, a neuron node, a relationship between input and output of each layer, and the like. This is not limited herein.

(1122) Model parameter information. The model parameter information is a configuration variable within the target model, used for defining a function of the target model. The model parameter information can be obtained through data estimation or model training. For example, the model parameter may include a weight in an artificial neural network, a support vector in a support vector machine, a coefficient in linear regression or logistic regression, and the like.

(1123) Model algorithm information. For example, the model algorithm information may include but is not limited to a decision tree, a Bayesian classifier, a K nearest neighbor, the support vector machine, and the like.

(1124) Model hyper-parameter information. The model hyper-parameter information is a configuration variable outside the target model, is generally used in a training process of the model parameter, and can usually be directly specified by a practitioner. For example, the model hyper-parameter information may include a learning rate of a training neural network, a C and sigma hyper-parameter of the support vector machine, a parameter k in a K neighbor, a loss function corresponding to the target model, a predetermined value of a loss function when the target model converges, and the like.

(1125) Type information of model input data, that is, a type of model input data (which can alternatively be understood as inference data) of a target pattern used when data inference is performed by using the target model.

(1126) Type information of the model output data. The type information of the model output data is a type of model output data (which can alternatively be understood as the first inference result and the second inference result) of the target pattern used when data inference is performed by using the target model.

In addition, in an implementation, in addition to the information of the target model, the information related to the target model may further include at least one of model instance identification information, second indication information, information related to the fourth network element, and model training configuration information.

The model instance identification information and the model instance identification information described in the foregoing (11) may be the same or different. In this embodiment, when the target model is obtained through training by the third network element, the model instance identification information may be allocated by the third network element and is used to uniquely identify the target model. For example, when the first network element determines to perform the federated model training process corresponding to the model training task, the first network element correspondingly allocates a piece of model instance identification information for the model training task, and the information indicates a model entity, namely, the target model, obtained through training by using the federated model training process.

Alternatively, the model instance identification information may further be used for the second network element to associate a local model with the target model.

The second indication information indicates that the target model is a vertical federated learning model, that is, the target model is obtained through a vertical federated model training process.

The information related to the fourth network element. The fourth network element is a network element participating in training of the target model, that is, the fourth network element is the training entity corresponding to the target model. The information related to the fourth network element may include identification information, address information, fully qualified domain name (Fully Qualified Domain Name, FQDN) information, name information, and the like of the fourth network element.

It should be noted that in an implementation, the first network element may determine information of the at least one second network element based on the information related to the target model. For example, the first network element determines the information of the at least one second network element based on the information related to the fourth network element that is included in the information related to the target model, and the fourth network element is a network element participating in training of the target model.

That is, when the target model is obtained through the vertical federated model training process, the second network element may alternatively be a training entity participating in the vertical federated model training process, that is, the second network element may be the same as the fourth network element.

(113) The first network element receives the information related to the target model that is sent by the third network element.

After receiving the information related to the target model, the first network element may save the information related to the target model for the subsequent federated inference process.

(12) Identification information of the first inference task, used for indicating a type or purpose of the inference task to the second network element. Alternatively, the identification information of the first inference task may be an analytics identifier (analytics ID), or the like.

(13) First indication information, indicating that the federated inference process is a vertical federated inference process. The vertical federated inference process can be understood as the following. Training data participating in the federated inference process corresponds to a same sample between different second network elements, but sample features are different. That is, an essence of the vertical federated inference process is combination of sample features, and the vertical federated inference process is applicable to an scenario in which users (namely, samples) overlap more and features (namely, sample features) overlap less, for example, different services (for example, an MM service and an SM service, that is, sample features are different) serving a same user (for example, a UE, that is, a sample is the same) in a CN domain and an RAN domain in a communication network. Based on this, in this application, feature dimensions of inference data are increased by combining different sample features of a common sample of an inference participant (namely, the second network element), to obtain a better inference result through inference.

(14) Information related to a first filter, used for limiting inference sample information corresponding to the first inference task, where the inference sample information includes at least one of inference object information, inference time information, and inference area information. For example, when the first inference task is a data analysis task, the information related to the first filter may be analytics filter information, and the like, and is used for each of the second network element to collect inference data corresponding to the inference object information, the inference time information, and the inference area information based on the information related to the first filter, so as to perform local data inference.

(15) Reporting information corresponding to the first inference result. Optionally, the reporting information corresponding to the first inference result includes at least one of the following (151) and (152).

(151) A reporting format of the first inference result, used for indicating a data format used by the second network element to report the first inference result after obtaining the first inference result.

(152) A reporting condition of the first inference result. The reporting condition may include event triggering and/or period triggering. The event triggering may include any one of (1521) and (1522).

(1521) When a quantity of inference rounds (or a quantity of inference times) of inference performed by the second network element reaches a predetermined value, the second network element reports the first inference result. For different second network elements, a quantity of inference rounds specified by the first network element in the reporting information may be different. In this way, the first network element may align a pace of the first inference result reported by each of the inference entity (namely, the second network element) in the federated inference process, thereby ensuring a consistent reporting pace of each inference entity and preventing a problem of falling behind.

(1522) The second network element reports the first inference result before a reporting time reaches a maximum waiting time (or feedback deadline).

The period triggering means that the second network element may periodically report the first inference result, for example, report the first inference result every 5 minutes.

It should be noted that in this embodiment, which information is specifically included in the federated inference request message may be realized through protocol agreement, high-level configuration, and the like. This is not limited herein.

Further, as a possible implementation, in this application, when the federated inference process is determined, in addition to triggering the process by the first network element based on the inference task of the first network element or triggering the process by the consumer device, whether a first condition is met may be further determined, and when the first condition is met, the first network element determines to perform the joint model inference process.

Optionally, the first condition may include at least one of the following (21) to (23).

(21) The first network element does not store or cannot obtain all or a part of the inference data corresponding to the inference process. For example, the first network element may lack a part or all of inference data of each of the inference entity (namely, the second network element) due to a data security issue or a data privacy issue. In this case, the first network element needs to utilize the federated model inference process to associate each of the second network element for local distributed model inference.

(22) The at least one second network element can provide all or a part of the inference data corresponding to the inference process.

(23) Samples of inference data between the second network elements required by the inference task are the same, but sample features are different. For example, the inference data used for federated model inference is MM-related data generated by a same UE or a group of UEs in a CN, or location data generated in an RAN, or business experience data generated in a third-party service.

It may be understood that the first condition includes which of the foregoing (21) to (23) may be realized through protocol agreement, high layer configuration, or network-side configuration. This is not limited herein.

S420: The first network element receives first information sent by the at least one second network element.

The first information at least includes the first inference result, the first inference result is obtained by the second network element based on a local inference model, the local inference model may be determined by the second network element based on the model instance identification information included in the federated inference request message, and the local inference model corresponds to the target model required by the federated inference process.

Certainly, in an implementation, for each of the second network element, a process in which the second network element determines the local inference model based on the model instance identification information included in the federated inference request message, and obtains the first inference result based on the inference model through inference may include (31) to (33). The content is as follows.

(31) The second network element determines the local inference model and type information of inference input data based on the model instance identification information in the federated inference request message.

(32) The second network element obtains inference input data based on the type information of the inference input data and the information related to the first filter in the federated inference request message.

For example, based on the type information of the inference input data and the information related to the first filter, the second network element may determine to collect inference data of all UEs in a cell 1 during a period from 07:00 to 09:00 every Monday, that is, the inference input data.

(33) The second network element performs inference based on the inference input data and the local inference model, to obtain the first inference result.

For example, the second network element inputs the collected inference input data into the local inference model, to obtain the first inference result.

Based on this, as an implementation, the first information may include at least one of the following (41) to (43) in addition to the first inference result.

(41) Model instance identification information, used for identifying a target model required by the federated inference process. In other words, the model instance identification information indicates to the first network element an identifier of the target model corresponding to the first inference result.

(42) Identification information of the first inference task.

(43) Inference sample information corresponding to the first inference result, where the inference sample information includes at least one of inference object information (for example, UE ID(s) or any UE), inference time information, and inference area information.

For the model instance identification information and the identification information of the first inference task, refer to the related description in the federated inference request message. The inference sample information corresponding to the first inference result is determined by the second network element based on inference sample information collected during inference. This is not limited herein.

S430: The first network element determines a second inference result corresponding to the first inference task based on at least one of the first inference result.

Refer to FIG. 4 again. It may be understood that in addition to referring to related description in the method embodiment 300, as a possible implementation, an implementation process of S430 may include S431. The content is as follows.

S431: The first network element calculates the second inference result based on the target model and at least one of the first inference result.

In an implementation, the first network element may associate and align, based on the inference sample information corresponding to the first inference result, the first inference result that is sent by the at least one second network element and that aims at a same inference sample. The first network element inputs the first inference result aiming at the same inference sample into the target model and obtains the second inference result aiming at the same inference sample.

When the first network element associates and aligns the first inference result sent by the second network element, this may be realized based on a UE granularity, or may be realized based on time information, or the like. This is not limited herein. For example, if the federated inference process is of a UE granularity, the first network element may calculate a final second inference result based on the UE granularity. That is, the first network element calculates and obtains a final inference result of federated learning corresponding to the UE, namely, the second inference result, based on the target model corresponding to the model instance identification information and a first inference result that corresponds to the UE and that is received from each of the second network element.

Alternatively, the first network element may further associate and align inference data at a same time point based on the time information. For example, the first network element performs association operation on first inference results that are of a same UE and both at 8:00 in an RAN domain and a CN domain, to obtain a final inference result corresponding to 8:00, namely, the second inference result.

In addition, identifiers of UEs from different second network elements may be different. For example, an identifier of a UE from the RAN may be an RAN NG application protocol identifier (RAN NG Application Protocol ID, RAN NGAP ID), and an identifier of a UE from the CN is an AMF NGAP ID or a subscription permanent identifier (Subscription Permanent Identifier, SUPI), or the like. Then, the first network element associates data and an inference result of a same UE based on a mapping relationship (for example, a mapping relationship between an RAN NGAP ID and an AMF NGAP ID) of different identifiers of the UE.

Further, in the federated inference process, when the first network element inputs the first inference result for the same inference sample into the target model, the first network element may further use inference data that is of the first network element and that is for the same inference sample as model input data, and input the inference data into the target model together with the first inference result, to obtain the second inference result.

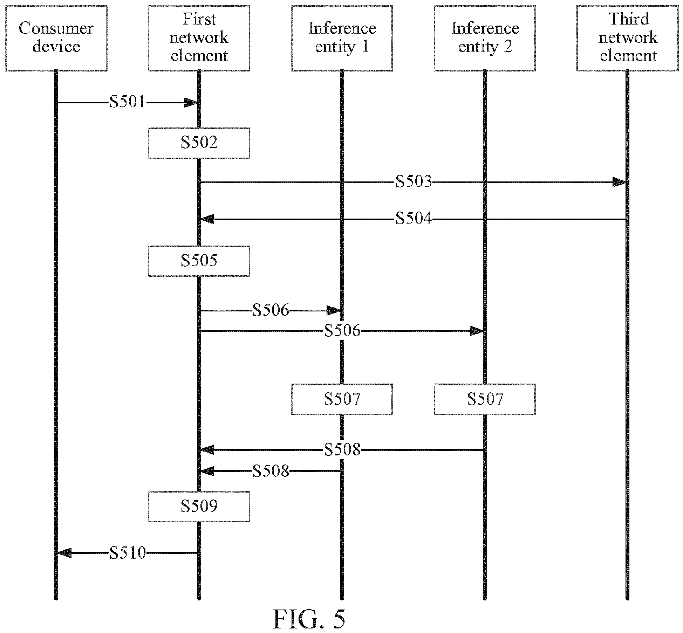

Further, based on the descriptions of the method embodiments 300 and 400, the federated inference process is illustrated below by using an example in which the federated inference process is triggered by the consumer device. The data inference process may include one or more second network elements. In this embodiment, for ease of understanding, the data inference process includes two second network elements, namely, an inference entity 1 and an inference entity 2 shown in FIG. 5.

S501: A consumer device sends an inference task request message to a first network element.

S502: The first network element determines, based on the inference task request message, whether to perform a federated inference process corresponding to the first inference task.

S503: In a case that the first network element performs the federated inference process corresponding to the first inference task, the first network element sends a model request message to a third network element.

S504: The first network element receives information related to a target model that is sent by the third network element, and the information related to the target model at least includes information of the target model.

S505: The first network element determines, based on the information related to the target model, information of a second network element that can participate in the federated inference process, for example, an inference entity 1 and an inference entity 2.

S506: The first network element sends a federated inference request message to the inference entity 1 and the inference entity 2.

S507: In a case that the inference entity 1 receives the federated inference request message, the inference entity 1 determines a local inference model based on model instance identification information included in the federated inference request message, and obtains a first inference result through inference based on the local inference model.

Similarly, in a case that the inference entity 2 receives the federated inference request message, the inference entity 2 determines a local inference model based on the model instance identification information included in the federated inference request message, and obtains a first inference result through inference based on the local inference model.

S508: The inference entity 1 and the inference entity 2 respectively send the first inference result to the first network element.

S509: In a case that the first network element receives the first inference results sent by the inference entity 1 and the inference entity 2, the first network element determines a second inference result corresponding to the first inference task based on the first inference results sent by the inference entity 1 and the inference entity 2.

S510: The first network element sends the second inference result to a consumer device.

It should be noted that for an implementation process of the foregoing S501 to S510, refer to related descriptions in the method embodiments 300 and 400. In addition, same or corresponding technical effects are achieved. To avoid repetition, details are not described again herein.

In addition, in this embodiment, a training process of the federated model may include but is not limited to the foregoing S501 to S510, for example, may include more or fewer steps than the foregoing S501 to S510. This is not limited herein.

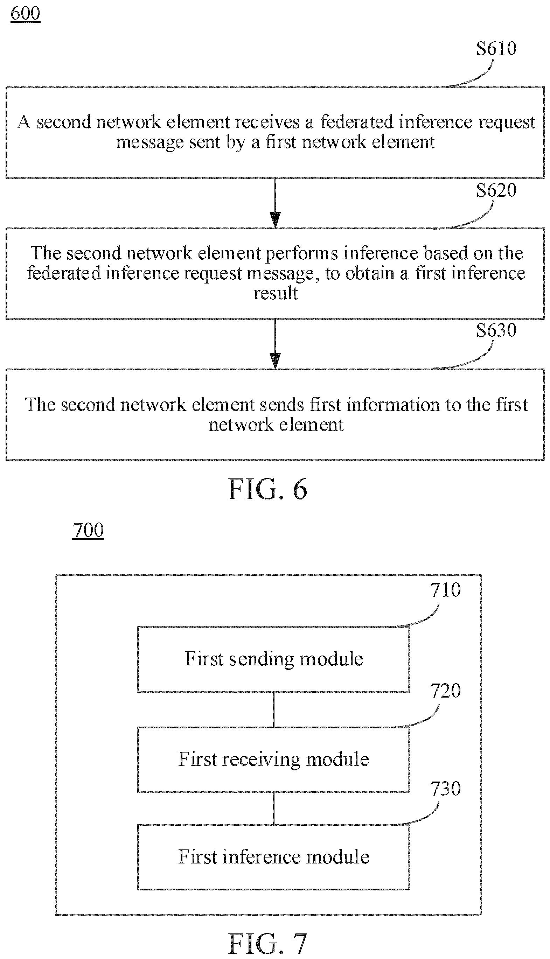

FIG. 6 is a schematic flowchart of a data processing method 600 according to an example embodiment of this application. The method 600 may be executed but is not limited to be executed by a first network element (for example, a terminal or a network-side device), and in particular, may be executed by hardware and/or software installed in the first network element. In this embodiment, the method 600 may at least include the following steps.

S610: A second network element receives a federated inference request message sent by a first network element, where the federated inference request message at least includes information related to a first inference task.

S620: The second network element performs inference based on the federated inference request message, to obtain a first inference result.

S630: The second network element sends first information to the first network element, and the first information at least includes the first inference result.

Optionally, the federated inference request message includes at least one of the following: model instance identification information, where the model instance identification information is used for identifying a target model required by a federated inference process; identification information of the first inference task; first indication information, indicating that the federated inference process is a vertical federated inference process; information related to a first filter, used for limiting inference sample information corresponding to the first inference task, where the inference sample information includes: at least one of inference object information, inference time information, and inference area information; and reporting information corresponding to the first inference result.

Optionally, the reporting information of the first inference result includes at least one of the following: a reporting format of the first inference result; and a reporting condition of the first inference result.

Optionally, the first information further includes at least one of the following: model instance identification information, where the model instance identification information is used for identifying a target model required by a federated inference process; identification information of the first inference task; and inference sample information corresponding to the first inference result, where the inference sample information includes: at least one of inference object information, inference time information, and inference area information.

Optionally, the step of performing, by the second network element, inference based on the federated inference request message, to obtain a first inference result includes: The second network element determines a local inference model and type information of inference input data based on the model instance identification information in the federated inference request message. The second network element obtains the inference input data based on the type information of the inference input data and the information related to the first filter in the federated inference request message. The second network element performs inference based on the inference input data and the local inference model, to obtain the first inference result.

It may be understood that for an implementation process of each implementation in the method embodiment 600, refer to the related descriptions in the method embodiments 300 to 500. In addition, same or corresponding technical effects are achieved. To avoid repetition, details are not described herein again.

In the data processing methods provided in embodiments of this application, an executing subject may be a data processing apparatus. In this embodiment of this application, an example in which a data processing apparatus executes a data processing method is used to describe the data processing apparatus provided in this embodiment of this application.

FIG. 7 is a schematic diagram of a structure of a data processing apparatus 700 according to an example embodiment of this application. The apparatus 700 may include: a first sending module 710, configured to: in a case that a federated inference process corresponding to a first inference task is performed, send a federated inference request message to at least one second network element, where the federated inference request message at least includes information related to the first inference task, and the second network element is a network element participating in the federated inference process; a first receiving module 720, configured to receive first information sent by the at least one second network element, where the first information includes at least a first inference result; and a first inference module 730, configured to determine, based on at least one of the first inference result, a second inference result corresponding to the first inference task.

Optionally, the first inference module is further configured to determine that a first condition is met, and the first condition includes at least one of the following: the first network element does not store or cannot obtain all or a part of inference data corresponding to the inference process; the at least one second network element can provide all or a part of the inference data corresponding to the inference process; and samples of inference data between second network elements required by the inference task are the same, but sample features are different.

Optionally, the federated inference request message includes at least one of the following: model instance identification information, where the model instance identification information is used for identifying a target model required by a federated inference process; identification information of the first inference task; first indication information, indicating that the federated inference process is a vertical federated inference process; information related to a first filter, used for limiting inference sample information corresponding to the first inference task, where the inference sample information includes: at least one of inference object information, inference time information, and inference area information; and reporting information corresponding to the first inference result.

Optionally, the reporting information corresponding to the first inference result includes at least one of the following: a reporting format of the first inference result; and a reporting condition of the first inference result.

Optionally, the first inference result is obtained by the second network element through inference based on a local inference model, and the local inference model is determined by the second network element based on model instance identification information included in the federated inference request message.

Optionally, the first information further includes at least one of the following: model instance identification information, used for identifying a target model required by the federated inference process; identification information of the first inference task; and inference sample information corresponding to the first inference result, where the inference sample information includes: at least one of inference object information, inference time information, and inference area information.

Optionally, the step of determining, by the first inference module 730 based on at least one of the first inference result, a second inference result corresponding to the first inference task includes: calculating the second inference result based on the target model and at least one of the first inference result.

Optionally, the step of calculating, by the first inference module 730, the second inference result based on the target model and at least one of the first inference result includes: associating and aligning, based on the inference sample information corresponding to the first inference result, the first inference result that is sent by the at least one second network element and aims at a same inference sample; and inputting the first inference result aiming at the same inference sample into the target model to, obtain the second inference result aiming at the same inference sample.

Optionally, the first sending module 710 is further configured to send a model request message to a third network element, where the model request message is used for requesting the third network element to train and/or feed back the target model. The first receiving module 720 is further configured to receive information related to the target model that is sent by the third network element, and the information related to the target model at least includes information of the target model.

Optionally, the model request message includes least one of the following: type information of a model training task; identification information of the model training task; information related to a second filter, used for limiting at least one of a target object, a target time, and a target area corresponding to the model training task; and information related to model feedback, where the information related to model feedback includes at least one of a model description manner and a model feedback time.

Optionally, the information related to the target model further includes at least one of the following: model instance identification information; second indication information, indicating that the target model is a vertical federated learning model; and information related to a fourth network element, where the fourth network element is a network element participating in training of the target model.

Optionally, the information of the target model includes at least one of the following: model structure information; model parameter information; model algorithm information; model hyper-parameter information; type information of model input data; and type information of model output data.

Optionally, the first inference module 730 is further configured to determine information of the at least one second network element based on the information related to the target model.

Optionally, the step of determining, by the first inference module 730, information of the at least one second network element based on the information related to the target model includes: determining the information of the at least one second network element based on the information related to the fourth network element that is included in the information related to the target model, where the fourth network element is a network element participating in training of the target model.

Optionally, the first receiving module 720 is further configured to receive an inference task request message sent by a consumer device, where the inference task request message includes the information related to the first inference task. The first sending module 710 is further configured to send the second inference result to the consumer device.

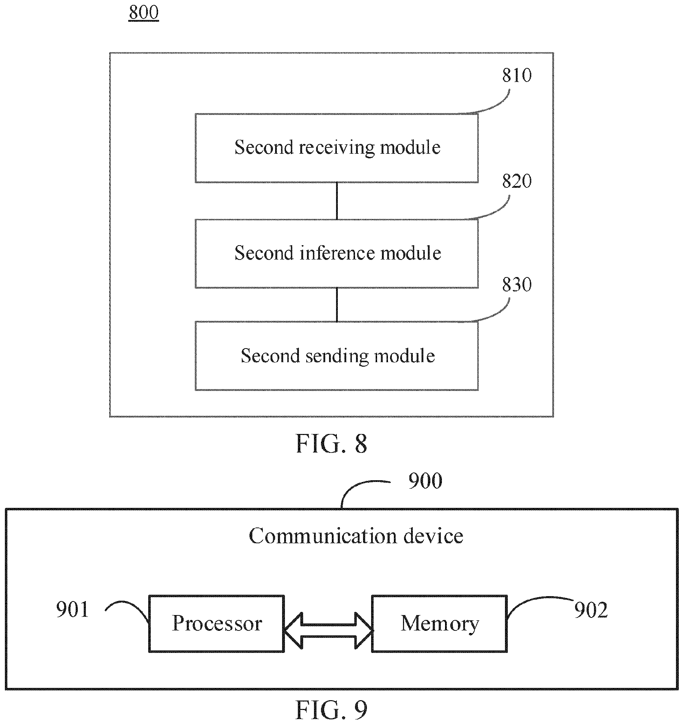

FIG. 8 is a schematic diagram of a structure of a data processing apparatus 800 according to an example embodiment of this application. The apparatus 800 may include: a second receiving module 810, configured to receive a federated inference request message sent by a first network element, where the federated inference request message at least includes information related to a first inference task; a second inference module 820, configured to perform inference based on the federated inference request message, to obtain a first inference result; and a second sending module 830, configured to send first information to the first network element, where the first information includes at least the first inference result.

Optionally, the federated inference request message includes at least one of the following: model instance identification information, where the model instance identification information is used for identifying a target model required by a federated inference process; identification information of the first inference task; first indication information, indicating that the federated inference process is a vertical federated inference process; information related to a first filter, used for limiting inference sample information corresponding to the first inference task, where the inference sample information includes: at least one of inference object information, inference time information, and inference area information; and reporting information corresponding to the first inference result.

Optionally, the reporting information of the first inference result includes at least one of the following: a reporting format of the first inference result; and a reporting condition of the first inference result.

Optionally, the first information further includes at least one of the following: model instance identification information, where the model instance identification information is used for identifying a target model required by a federated inference process; identification information of the first inference task; and inference sample information corresponding to the first inference result, where the inference sample information includes: at least one of inference object information, inference time information, and inference area information.

Optionally, the step of performing, by the second inference module 820, inference based on the federated inference request message, to obtain a first inference result includes: determining a local inference model and type information of inference input data based on the model instance identification information in the federated inference request message; obtaining the inference input data based on the type information of the inference input data and the information related to the first filter in the federated inference request message; and performing inference based on the inference input data and the local inference model, to obtain the first inference result.

The data processing apparatuses 700 and 800 in embodiments of this application may be a communication device, for example, a communication device having an operating system, or a component in the communication device, for example, an integrated circuit or a chip. The communication device may be a terminal, or may be a network-side device other than a terminal. For example, the terminal may include but is not limited to the types of the terminal 11 that are listed above, and the network-side device may include but is not limited to the types of the network-side device 12 that are listed above. This is not specifically limited in embodiments of this application.

The data processing apparatuses 700 and 800 provided in embodiments of this application can implement all processes implemented in the method embodiments shown in FIG. 3 to FIG. 6, and same technical effects can be achieved. To avoid repetition, details are not described herein again.

Optionally, as shown in FIG. 9, an embodiment of this application further provides a communication device 900 including a processor 901 and a memory 902. The memory 902 stores a program or instructions than can be run on the processor 901. For example, when the communication device 900 is a terminal, when the program or the instructions is/are executed by the processor 901, steps of the data processing method embodiment are implemented, and same technical effects can be achieved. When the communication device 900 is a network-side device, when the program or the instructions is/are executed by the processor 901, steps of the data processing method embodiment are implemented, and same technical effects can be achieved. To avoid repetition, details are not described herein again.

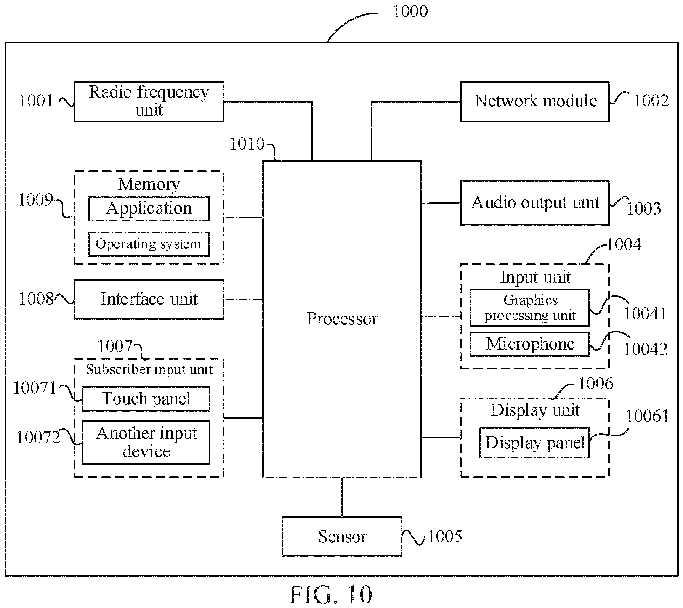

In an implementation, the communication may be a terminal. FIG. 10 is a schematic diagram of a structure of a terminal according to an embodiment of this application. The terminal includes a processor and a communication interface. The communication interface is coupled to the processor. The processor is configured to run a program or instructions, to implement steps of the method according to the method embodiments 300 to 600. The terminal embodiment corresponds to the terminal-side method embodiment, and each implementation process and implementation of the method embodiment can be applied to the terminal embodiment, and same technical effects can be achieved. Specifically, FIG. 10 is a schematic diagram of a hardware structure of a terminal that implements an embodiment of this application.

The terminal 1000 includes, but is not limited to: at least some components in a radio frequency unit 1001, a network module 1002, an audio output unit 1003, an input unit 1004, a sensor 1005, a display unit 1006, a user input unit 1007, an interface unit 1008, a memory 1009, and a processor 1010.

A person skilled in the art may understand that the terminal 1000 may further include a power supply (for example, a battery) for supplying power to the components. The power supply may be logically connected to the processor 1010 by a power management system, thereby implementing functions such as charging, discharging, and power consumption management by using the power management system. The terminal structure shown in FIG. 10 does not constitute a limitation on the terminal, and the terminal may include more or fewer components than those shown in the figure, or combine some components, or have different component arrangements. Details are not described herein again.

It may be understood that in this embodiment of this application, the input unit 1004 may include a graphics processing unit (Graphics Processing Unit, GPU) 1041 and a microphone 10042. The graphics processing unit 10041 performs processing on image data of a static picture or a video that is obtained by an image collection device (for example, a camera) in a video collection mode or an image collection mode. The display unit 1006 may include a display panel 10061. The display panel 10061 may be configured in the form of a liquid crystal display, an organic light-emitting diode, or the like. The user input unit 1007 includes at least one of a touch panel 10071 and another input device 10072. The touch panel 10071 is also known as a touch screen. The touch panel 10071 may include two parts: a touch detection apparatus and a touch controller. Specifically, the another input device 10072 may include, but not limited to, a physical keyboard, a function key (for example, a volume control key or a switch key), a track ball, a mouse, and a joystick. Details are not described herein again.

In this embodiment of this application, the radio frequency unit 1001 receives downlink data from a network-side device, and then sends the downlink data to the processor 1010 for processing. In addition, the radio frequency unit 1001 may send uplink data to the network-side device. Usually, the radio frequency unit 1001 includes, but is not limited to, an antenna, an amplifier, a transceiver, a coupler, a low noise amplifier, a duplexer, and the like.

The memory 1009 may be configured to store a software program, instructions, and various data. The memory 1009 may mainly include a first storage area that stores a program or instructions, and a second storage area that stores data. The first storage area may store an operating system, an application or instructions required by at least one function (for example, a sound playback function and an image display function), and the like. In addition, the memory 1009 may include a volatile memory or a non-volatile memory, or may include both the volatile memory and the non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch link dynamic random access memory (Synch link DRAM, SLDRAM), and a direct rambus random access memory (Direct Rambus RAM, DR RAM). The memory 1009 in this embodiment of this application includes, but is not limited to, these memories and any other suitable types of memories.

The processor 1010 may include one or more processing units. Optionally, the processor 1010 integrate an application processor and a modem processor, where the application processor mainly processes operations involving an operating system, a user interface, an application program, and the like, and the modem processor mainly processes a wireless communication signal, for example, a baseband processor. It may be understood that the foregoing modem processor may not be integrated into the processor 1010.

In one implementation, the radio frequency unit 1001 is configured to: in a case that a federated inference process corresponding to a first inference task is performed, send a federated inference request message to at least one second network element, where the federated inference request message at least includes information related to the first inference task, and the second network element is a network element participating in the federated inference process. The radio frequency unit 1001 is configured to receive first information sent by the at least one second network element, where the first information includes at least a first inference result. The processor 1010 is configured to determine, based on at least one of the first inference result, a second inference result corresponding to the first inference task.

Optionally, the first inference module is further configured to determine that a first condition is met, and the first condition includes at least one of the following: the first network element does not store or cannot obtain all or a part of inference data corresponding to the inference process; the at least one second network element can provide all or a part of the inference data corresponding to the inference process; and samples of inference data between second network elements required by the inference task are the same, but sample features are different.

Optionally, the federated inference request message includes at least one of the following: model instance identification information, where the model instance identification information is used for identifying a target model required by a federated inference process; identification information of the first inference task; first indication information, indicating that the federated inference process is a vertical federated inference process; information related to a first filter, used for limiting inference sample information corresponding to the first inference task, where the inference sample information includes: at least one of inference object information, inference time information, and inference area information; and reporting information corresponding to the first inference result.

Optionally, the reporting information corresponding to the first inference result includes at least one of the following: a reporting format of the first inference result; and a reporting condition of the first inference result.

Optionally, the first inference result is obtained by the second network element through inference based on a local inference model, and the local inference model is determined by the second network element based on model instance identification information included in the federated inference request message.

Optionally, the first information further includes at least one of the following: model instance identification information, used for identifying a target model required by the federated inference process; identification information of the first inference task; and inference sample information corresponding to the first inference result, where the inference sample information includes: at least one of inference object information, inference time information, and inference area information.

Optionally, the step of determining, by the processor 1010 based on at least one of the first inference result, a second inference result corresponding to the first inference task includes: calculating the second inference result based on the target model and at least one of the first inference result.

Optionally, the step of calculating, by the processor 1010, the second inference result based on the target model and at least one of the first inference result includes: associating and aligning, based on the inference sample information corresponding to the first inference result, the first inference result that is sent by the at least one second network element and aims at a same inference sample; and inputting the first inference result aiming at the same inference sample into the target model, to obtain the second inference result aiming at the same inference sample.

Optionally, the radio frequency unit 1001 is further configured to send a model request message to a third network element, and the model request message is configured to request the third network element to train and/or feed back the target model. The radio frequency unit 1001 is further configured to receive information related to the target model that is sent by the third network element, and the information related to the target model at least includes information of the target model.

Optionally, the model request message includes least one of the following: type information of a model training task; identification information of the model training task; information related to a second filter, used for limiting at least one of a target object, a target time, and a target area corresponding to the model training task; and information related to model feedback, where the information related to model feedback includes at least one of a model description manner and a model feedback time.

Optionally, the information related to the target model further includes at least one of the following: model instance identification information; second indication information, indicating that the target model is a vertical federated learning model; and information related to a fourth network element, where the fourth network element is a network element participating in training of the target model.

Optionally, the information of the target model includes at least one of the following: model structure information; model parameter information; model algorithm information; model hyper-parameter information; type information of model input data; and type information of model output data.

Optionally, the processor 1010 is further configured to determine information of the at least one second network element based on the information related to the target model.

Optionally, the step of determining, by the processor 1010, information of the at least one second network element based on the information related to the target model includes: determining the information of the at least one second network element based on the information related to the fourth network element that is included in the information related to the target model, where the fourth network element is a network element participating in training of the target model.

Optionally, the radio frequency unit 1001 is further configured to receive an inference task request message sent by a consumer device, where the inference task request message includes the information related to the first inference task. The radio frequency unit 1001 is further configured to send the second inference result to the consumer device.

In another implementation, the radio frequency unit 1001 is configured to receive a federated inference request message sent by the first network element, where the federated inference request message at least includes information related to the first inference task. A second inference module 820 is configured to perform inference based on the federated inference request message, to obtain the first inference result. The radio frequency unit 1001 is configured to send first information to the first network element, where the first information includes at least the first inference result.

Optionally, the federated inference request message includes at least one of the following: model instance identification information, where the model instance identification information is used for identifying a target model required by a federated inference process; identification information of the first inference task; first indication information, indicating that the federated inference process is a vertical federated inference process; information related to a first filter, used for limiting inference sample information corresponding to the first inference task, where the inference sample information includes: at least one of inference object information, inference time information, and inference area information; and reporting information corresponding to the first inference result.

Optionally, the reporting information of the first inference result includes at least one of the following: a reporting format of the first inference result; and a reporting condition of the first inference result.

Optionally, the first information further includes at least one of the following: model instance identification information, where the model instance identification information is used for identifying a target model required by a federated inference process; identification information of the first inference task; and inference sample information corresponding to the first inference result, where the inference sample information includes: at least one of inference object information, inference time information, and inference area information.

Optionally, the step of performing, by the second inference module 820, inference based on the federated inference request message, to obtain a first inference result includes: determining a local inference model and type information of inference input data based on the model instance identification information in the federated inference request message; obtaining the inference input data based on the type information of the inference input data and the information related to the first filter in the federated inference request message; and performing inference based on the inference input data and the local inference model, to obtain the first inference result.

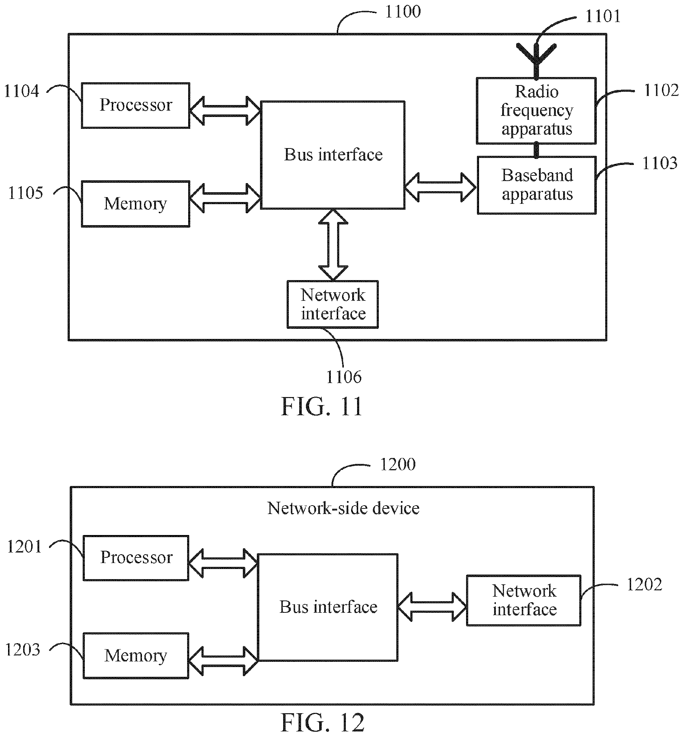

FIG. 11 is a schematic diagram of a structure of a network-side device according to an embodiment of this application. When the communication device 900 is a network-side device, the device includes a processor and a communication interface, the communication interface is coupled to the processor, and the processor is configured to run a program or instructions, to implement the steps of the method shown in the embodiments 300 to 600. The network-side device embodiment corresponds to the network-side device method embodiment, and each implementation process and implementation of the method embodiment can be applied to the network-side device embodiment, and same technical effects can be achieved.

For example, FIG. 11 is a schematic diagram of a structure of a network-side device 1100 according to an embodiment of this application. The network-side device 1100 includes: an antenna 1101, a radio frequency apparatus 1102, a baseband apparatus 1103, a processor 1104, and a memory 1105. The antenna 1101 is connected to the radio frequency apparatus 1102. In an uplink direction, the radio frequency apparatus 1102 receives information through the antenna 1101, and sends the received information to the baseband apparatus 1103 for processing. In a downlink direction, the baseband apparatus 1103 processes information to be sent and sends the information to the radio frequency apparatus 1102. The radio frequency apparatus 1102 processes the received information and sends the information through the antenna 1101.

The method performed by the network-side device in the foregoing embodiments may be implemented in the baseband apparatus 1103, and the baseband apparatus 1103 includes a baseband processor.

The baseband apparatus 1103 may include, for example, at least one baseband plate on which a plurality of chips are provided. As shown in FIG. 11, one of the chips is, for example, a baseband processor connected to the memory 1105 through a bus interface, to invoke a program in the memory 1105 to perform operations of the network device shown in the foregoing method embodiments.

The network-side device may further include a network interface 1106, for example, the interface is a common public radio interface (common public radio interface, CPRI).

Specifically, the network-side device 1100 in this embodiment of the present invention further includes: instructions or a program that are/is stored in the memory 1105 and can be run on the processor 1104. The processor 1104 invokes the instructions or the program in the memory 1105 to perform the methods performed by the modules shown in FIG. 7 or FIG. 8. Same technical effects are achieved. To avoid repetition, details are not described herein again.

For example, FIG. 12 is a schematic diagram of a structure of another network-side device 1200 according to an embodiment of this application. The network-side device 1200 includes: a processor 1201, a network interface 1202, and a memory 1203. The network interface 1202 is, for example, a common public radio interface (common public radio interface, CPRI).

Specifically, the network-side device 1200 in this embodiment of the present invention further includes: instructions or a program that are/is stored in the memory 1105 and can be run on the processor 1104. The processor 1201 invokes the instructions or the program in the memory 1203 to perform the methods performed by the modules shown in FIG. 7 or FIG. 8. Same technical effects are achieved. To avoid repetition, details are not described herein again.

An embodiment of this application further provides a readable storage medium, storing a program or instructions. When the program or the instructions is/are executed by a processor, the processes of the foregoing data processing method embodiments are implemented, and same technical effects are achieved. To avoid repetition, details are not described herein again.

The processor the processor in the terminal in the foregoing embodiment. The readable storage medium includes a computer-readable storage medium, for example, a computer read-only memory ROM, a random access memory RAM, a magnetic disk, or an optical disk.

An embodiment of this application further provides a chip, and the chip includes a processor and a communication interface. The communication interface is coupled to the processor. The processor is configured to run a network-side device program or instructions, to implement all processes of the data processing method embodiments, and same technical effects can be achieved. To avoid repetition, details are not described herein again.

It should be understood that the chip mentioned in embodiments of this application may also be referred to as a system-level chip, a system chip, a chip system, a system-on-chip, or the like.

An embodiment of this application further provides a computer program product, and the computer program product includes a processor, a memory, and a program or instructions that is/are stored in the memory and can be run on the processor. When the program or the instructions is/are executed by the processor, the processes of the data processing method embodiments are implemented, and same technical effects can be achieved. To avoid repetition, details are not described herein again.

An embodiment of this application further provides a federated data processing system, and the system at least includes: a first network element and a second network element, where the first network element may be configured to perform the steps in the method embodiments 300 and 400, and the second network element may be configured to perform the steps in the method embodiment 500.

It should be noted that the terms "include", "contain", or any other variation thereof in this specification is intended to cover a non-exclusive inclusion, which specifies the presence of stated processes, methods, objects, or apparatuses, but do not preclude the presence or addition of one or more other processes, methods, objects, or apparatuses. Without more limitations, elements defined by the sentence "including one" does not exclude that there are still other same elements in the processes, methods, objects, or apparatuses. Further, it should be noted that the scope of the methods and apparatuses in embodiments of this application is not limited to performing functions in the order shown or discussed, but may further include performing functions in a substantially simultaneous manner or in reverse order depending on the functions involved, for example, the described methods may be performed in a different order than described, and various steps may be added, omitted, or combined. In addition, features described with reference to some examples may be combined in other examples.

According to the descriptions in the foregoing implementations, a person skilled in the art may clearly learn that the method according to the foregoing embodiment may be implemented by relying on software and a commodity hardware platform or by using hardware. Certainly, hardware may be used. However, in most cases, software is a preferred implementation. Based on such an understanding, the technical solutions of this application essentially, or the part contributing to the prior art, may be presented in the form of a software product. The computer software product is stored in a storage medium (for example, a ROM/RAM, a magnetic disk, or an optical disc) including several instructions to enable a terminal (which may be a mobile phone, a computer, a server, a network device, or the like) to perform the methods described in embodiments of this application.

Embodiments of this application have been described above with reference to the accompanying drawings. However, this application is not limited to the specific embodiments described above, and the specific embodiments described above are merely exemplary and not limitative. A person of ordinary skill in the art may make various variations under the teaching of this application without departing from the spirit of this application and the protection scope of the claims, and such variations shall all fall within the protection scope of this application.

## Claims

1. A data processing method, comprising:
in a case that a first network element performs a federated inference process corresponding to a first inference task, the first network element sends a federated inference request message to at least one second network element, wherein the federated inference request message at least comprises information related to the first inference task, and the second network element is a network element participating in the federated inference process;
receiving, by the first network element, first information sent by the at least one second network element, wherein the first information at least comprises a first inference result; and
determining, by the first network element based on at least one of the first inference result, a second inference result corresponding to the first inference task.

2. The method according to claim 1, wherein before the sending a federated inference request message to at least one second network element, the method further comprises:
determining, by the first network element, that a first condition is met, wherein the first condition comprises at least one of the following:
the first network element does not store or cannot obtain all or a part of inference data corresponding to the inference process;
the at least one second network element can provide all or a part of the inference data corresponding to the inference process; and
samples of inference data between second network elements required by the inference task are the same, but sample features are different.

3. The method according to claim 1, wherein the federated inference request message comprises at least one of the following:
model instance identification information, wherein the model instance identification information is used for identifying a target model required by the federated inference process;
identification information of the first inference task;
first indication information, indicating that the federated inference process is a vertical federated inference process;
information related to a first filter, used for limiting inference sample information corresponding to the first inference task, wherein the inference sample information comprises: at least one of inference object information, inference time information, and inference area information; and
reporting information corresponding to the first inference result.

4. The method according to claim 3, wherein the reporting information corresponding to the first inference result comprises at least one of the following:
a reporting format of the first inference result; and
a reporting condition of the first inference result.

5. The method according to claim 1, wherein the first inference result is obtained by the second network element through inference based on a local inference model, and the local inference model is determined by the second network element based on model instance identification information comprised in the federated inference request message.

6. The method according to claim 1, wherein the first information further comprises at least one of the following:
model instance identification information, used for identifying a target model required by the federated inference process;
identification information of the first inference task; and
inference sample information corresponding to the first inference result, wherein the inference sample information comprises: at least one of inference object information, inference time information, and inference area information.

7. The method according to any one of claims 1 to 6, wherein the step of determining, by the first network element based on at least one of the first inference result, a second inference result corresponding to the first inference task comprises:
calculating, by the first network element, the second inference result based on the target model and at least one of the first inference result.

8. The method according to claim 7, wherein the step of calculating, by the first network element, the second inference result based on the target model and at least one of the first inference result comprises:
associating and aligning, by the first network element based on the inference sample information corresponding to the first inference result, the first inference result that is sent by the at least one second network element and aims at a same inference sample; and
inputting, by the first network element, the first inference result aiming at the same inference sample into the target model to obtain the second inference result aiming at the same inference sample.

9. The method according to any one of claims 1 to 8, wherein the method further comprises:
sending, by the first network element, a model request message to a third network element, wherein the model request message is used for requesting the third network element to train and/or feedback the target model; and
receiving, by the first network element, information related to the target model sent by the third network element, wherein the information related to the target model at least comprises information of the target model.

10. The method according to claim 9, wherein the model request message comprises at least one of the following:
type information of a model training task;
identification information of the model training task;
information related to a second filter, used for defining at least one of a target object, a target time, and a target area that correspond to the model training task; and
information related to model feedback, wherein the information related to model feedback comprises at least one of a model description manner and a model feedback time.

11. The method according to claim 9, wherein the information related to the target model further comprises at least one of the following:
the model instance identification information;
second indication information indicating that the target model is a vertical federated learning model; and
information related to a fourth network element, wherein the fourth network element is a network element participating in training of the target model.

12. The method according to claim 9, wherein the information of the target model comprises at least one of the following:
model structure information;
model parameter information;
model algorithm information;
model hyper-parameter information;
type information of model input data; and
type information of model output data.

13. The method according to claim 9, wherein before the step of sending a federated inference request message to at least one second network element, the method further comprises:
determining, by the first network element, information of the at least one second network element based on the information related to the target model.

14. The method according to claim 13, wherein the step of determining, by the first network element, information of the at least one second network element based on the information related to the target model comprises:
determining, by the first network element, the information of the at least one second network element based on the information related to the fourth network element that is comprised in the information related to the target model, wherein the fourth network element is a network element participating in training of the target model.

15. The method according to any one of claims 1 to 14, wherein the method further comprises:
receiving, by the first network element, an inference task request message sent by a consumer device, wherein the inference task request message comprises the information related to the first inference task; and
sending, by the first network element, the second inference result to the consumer device.

16. A data processing method, comprising:
receiving, by a second network element, a federated inference request message sent by a first network element, wherein the federated inference request message at least comprises information related to a first inference task;
performing, by the second network element, inference based on the federated inference request message, to obtain a first inference result; and
sending, by the second network element, first information to the first network element, wherein the first information at least comprises the first inference result.

17. The method according to claim 16, wherein the federated inference request message comprises at least one of the following:
model instance identification information, wherein the model instance identification information is used for identifying a target model required by a federated inference process;
identification information of the first inference task;
first indication information, indicating that the federated inference process is a vertical federated inference process;
information related to a first filter, used for limiting inference sample information corresponding to the first inference task, wherein the inference sample information comprises: at least one of inference object information, inference time information, and inference area information; and
reporting information corresponding to the first inference result.

18. The method according to claim 17, wherein the reporting information of the first inference result comprises at least one of the following:
a reporting format of the first inference result; and
a reporting condition of the first inference result.

19. The method according to claim 16, wherein the first information further comprises at least one of the following:
model instance identification information, wherein the model instance identification information is used for identifying a target model required by a federated inference process;
identification information of the first inference task; and
inference sample information corresponding to the first inference result, wherein the inference sample information comprises: at least one of inference object information, inference time information, and inference area information.

20. The method according to any one of claims 16 to 19, wherein the step of performing, by the second network element, inference based on the federated inference request message, to obtain a first inference result comprises:
determining, by the second network element, a local inference model and type information of inference input data based on the model instance identification information in the federated inference request message;
obtaining, by the second network element, the inference input data based on the type information of the inference input data and the information related to the first filter in the federated inference request message; and
performing, by the second network element, inference based on the inference input data and the local inference model, to obtain the first inference result.

21. A data processing apparatus, comprising:
a first sending module, configured to: in a case that a federated inference process corresponding to a first inference task is performed, send a federated inference request message to at least one second network element, wherein the federated inference request message at least comprises information related to the first inference task, and the second network element is a network element participating in the federated inference process;
a first receiving module, configured to receive first information sent by the at least one second network element, wherein the first information at least comprises a first inference result; and
a first inference module, configured to determine, based on at least one of the first inference result, a second inference result corresponding to the first inference task.

22. The apparatus according to claim 21, wherein the first inference module is further configured to determine that a first condition is met, and the first condition comprises at least one of the following:
the first network element does not store or cannot obtain all or a part of inference data corresponding to the inference process;
the at least one second network element can provide all or a part of the inference data corresponding to the inference process; and
samples of inference data between second network elements required by the inference task are the same, but sample features are different.

23. The apparatus according to claim 21, wherein the federated inference request message comprises at least one of the following:
model instance identification information, wherein the model instance identification information is used for identifying a target model required by the federated inference process;
identification information of the first inference task;
first indication information, indicating that the federated inference process is a vertical federated inference process;
information related to a first filter, used for limiting inference sample information corresponding to the first inference task, wherein the inference sample information comprises: at least one of inference object information, inference time information, and inference area information; and
reporting information corresponding to the first inference result.

24. The apparatus according to claim 23, wherein the reporting information corresponding to the first inference result comprises at least one of the following:
a reporting format of the first inference result; and
a reporting condition of the first inference result.

25. The apparatus according to claim 21, wherein the first inference result is obtained by the second network element through inference based on a local inference model, and the local inference model is determined by the second network element based on model instance identification information comprised in the federated inference request message.

26. The apparatus according to claim 21, wherein the first information further comprises at least one of the following:
model instance identification information, used for identifying a target model required by the federated inference process;
identification information of the first inference task; and
inference sample information corresponding to the first inference result, wherein the inference sample information comprises: at least one of inference obj ect information, inference time information, and inference area information.

27. The apparatus according to any one of claims 21 to 26, wherein the step of determining, by the first inference module based on at least one of the first inference result, a second inference result corresponding to the first inference task comprises:
calculating the second inference result based on the target model and at least one of the first inference result.

28. The apparatus according to claim 27, wherein the step of calculating, by the first inference module, the second inference result based on the target model and at least one of the first inference result comprises:
associating and aligning, based on the inference sample information corresponding to the first inference result, the first inference result that is sent by the at least one second network element and aims at a same inference sample; and
inputting the first inference result aiming at the same inference sample into the target model, to obtain the second inference result aiming at the same inference sample.

29. The apparatus according to any one of claims 21 to 28, wherein the first sending module is further configured to send a model request message to a third network element, wherein the model request message is used for requesting the third network element to train and/or feedback the target model; and
the first receiving module is further configured to receive information related to the target model that is sent by the third network element, and the information related to the target model at least comprises information of the target model.

30. The apparatus according to claim 29, wherein the model request message comprises at least one of the following:
type information of a model training task;
identification information of the model training task;
information related to a second filter, used for defining at least one of a target object, a target time, and a target area that correspond to the model training task; and
information related to model feedback, wherein the information related to model feedback comprises at least one of a model description manner and a model feedback time.

31. The apparatus according to claim 29, wherein the information related to the target model further comprises at least one of the following:
the model instance identification information;
second indication information indicating that the target model is a vertical federated learning model; and
information related to a fourth network element, wherein the fourth network element is a network element participating in training of the target model.

32. The apparatus according to claim 9, wherein the information of the target model comprises at least one of the following:
model structure information;
model parameter information;
model algorithm information;
model hyper-parameter information;
type information of model input data; and
type information of model output data.

33. The apparatus according to claim 29, wherein the first inference module is further configured to determine information of the at least one second network element based on the information related to the target model.

34. The apparatus according to claim 33, wherein the step of determining, by the first inference module, information of the at least one second network element based on the information related to the target model comprises:
determining the information of the at least one second network element based on the information related to the fourth network element that is comprised in the information related to the target model, wherein the fourth network element is a network element participating in training of the target model.

35. The apparatus according to any one of claims 21 to 34, wherein the first receiving module is further configured to receive an inference task request message sent by a consumer device, wherein the inference task request message comprises the information related to the first inference task; and
the first sending module is further configured to send the second inference result to the consumer device.

36. A data processing apparatus, wherein the apparatus comprises:
a second receiving module, configured to receive a federated inference request message sent by a first network element, wherein the federated inference request message at least comprises information related to a first inference task;
a second inference module, configured to perform inference based on the federated inference request message, to obtain a first inference result; and
a second sending module, configured to send first information to the first network element, wherein the first information at least comprises the first inference result.

37. The apparatus according to claim 36, wherein the federated inference request message comprises at least one of the following:
model instance identification information, wherein the model instance identification information is used for identifying a target model required by a federated inference process;
identification information of the first inference task;
first indication information, indicating that the federated inference process is a vertical federated inference process;
information related to a first filter, used for limiting inference sample information corresponding to the first inference task, wherein the inference sample information comprises: at least one of inference object information, inference time information, and inference area information; and
reporting information corresponding to the first inference result.

38. The apparatus according to claim 37, wherein the reporting information of the first inference result comprises at least one of the following:
a reporting format of the first inference result; and
a reporting condition of the first inference result.

39. The apparatus according to claim 36, wherein the first information further comprises at least one of the following:
model instance identification information, wherein the model instance identification information is used for identifying a target model required by a federated inference process;
identification information of the first inference task; and
inference sample information corresponding to the first inference result, wherein the inference sample information comprises: at least one of inference object information, inference time information, and inference area information.

40. The apparatus according to any one of claims 36 to 39, wherein the step of performing, by the second inference module, inference based on the federated inference request message, to obtain a first inference result comprises:
determining a local inference model and type information of inference input data based on the model instance identification information in the federated inference request message;
obtaining the inference input data based on the type information of the inference input data and the information related to the first filter in the federated inference request message; and
performing inference based on the inference input data and the local inference model, to obtain the first inference result.

41. A communication device, comprising a processor and a memory, wherein the memory stores a program or instructions that can be run on the processor, wherein when the program or the instructions is/are executed by the processor, the steps of the data inference method according to any one of claims 1 to 15, or the steps of the data inference method according to any one of claims 16 to 20 are implemented.

42. A readable storage medium, wherein the readable storage medium stores a program or instructions, wherein when the program or the instructions is/are executed by a processor, the steps of the data inference method according to any one of claims 1 to 15, or the steps of the data inference method according to any one of claims 16 to 20 are implemented.
